# EUROPEAN PATENT SPECIFICATION

(11) **EP 0 455 810 B1**
(45) Date of publication and mention of the grant of the patent: **03.07.1996**
(21) Application number: 89912132.1
(22) Date of filing: 07.11.1989
(51) Int. Cl.: B62D 5/087, B62D 6/02

(54) **POWER STEERING SYSTEM FOR VEHICLES**
SERVOLENKUNGSSYSTEM FÜR FAHRZEUGE
SYSTEME DE DIRECTION ASSISTEE POUR VEHICULES

(43) Date of publication of application: 13.11.1991
(73) Proprietor: HINO JIDOSHA KOGYO KABUSHIKI KAISHA, Hino-shi Tokyo 191 (JP)
(72) Inventor: MOMIYAMA, Fujio, 3-1-1, Hinodai Hino-shi Tokyo 191 (JP); TOKUDA, Noriaki, 3-1-1, Hinodai Hino-shi Tokyo 191 (JP)
(74) Representative: Hasenrader, Hubert
(86) International application number: JP8901143
(87) International publication number: WO9106462

(56) References cited:
- JP-A-59 118 574
- JP-A-63 106 181

## Description

### Field of the Invention

The present invention relates to a power steering device for use in motor vehicles and particularly to a power steering device which undergoes a speed sensory control and a responsiveness control.

### Background of the Invention

A popular power steering device for use in motor vehicles is a speed sensing type, however now a day a motor vehicle provided with a power steering device which undergoes a responsiveness control is demanded in view of drivability and stability.

Further, in order to enhance drivability and stability of motor vehicles it is necessary to investigate from two aspects, in that a motor vehicle response performance in response to steering operations of drivers, and a motor vehicle response performance in response to disturbances such as road irregularity and gust of wind.

For the former aspect, in consideration of advancement in motor vehicle high speeding and advanced aging of motor vehicle drivers which causes an expansion of physiological ability difference in relation to driving skill, it is necessary to dissolve problems caused by the advancement in high speeding and the expansion of physiological ability difference within the motor vehicle side.

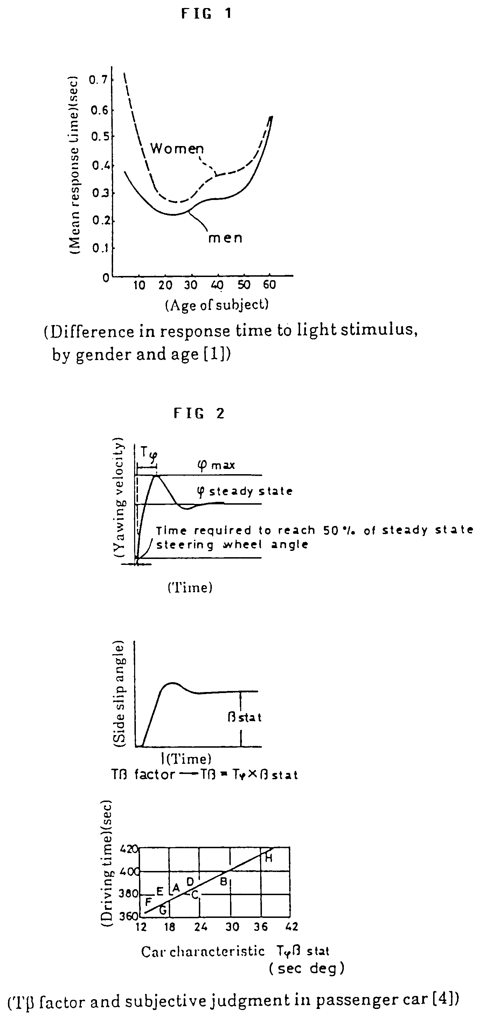

For example, an expressway in midnight is as if a huge belt conveyer filled up with groups of trucks. These trucks are flowing towards the metropolitan Tokyo. A between car distance in these truck groups is generally short and the speed thereof is high. Further highway buses between cities are spotlighted. Because of their advantages such as inexpensive fee and easiness, living space with a high sense and high quality, and attentive services, day time highway bus services are increasing not only but the night bus services which were understood at the beginning to supplement railway train services. As such, on one hand, high speed and long distance services are active, however on the other hand, in particular, with regard to trucks, a shortage of truck drivers is serious, in addition, age of the drivers has been increasing. Further there appears an indication of woman driver expansion. The higher the speed of a motor vehicle is, the more the response performance thereof reduces. Still further, physiological abilities relating to driving skill of advanced age drivers and woman drivers are relatively low in comparison with those of young man (see Fig. 1). A system is desired which realizes a compensation at the motor vehicle side of the decrease of response performance at a high speed region and the physiological ability difference of the drivers. Moreover, a large sized motor vehicle which necessitates relatively a wide space on the running road in comparison with a passenger car even has to be provided with a more excellent response performance than the passenger car.

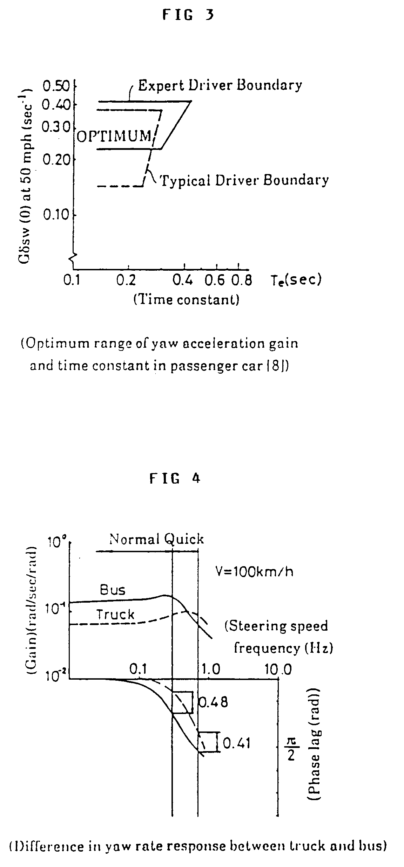

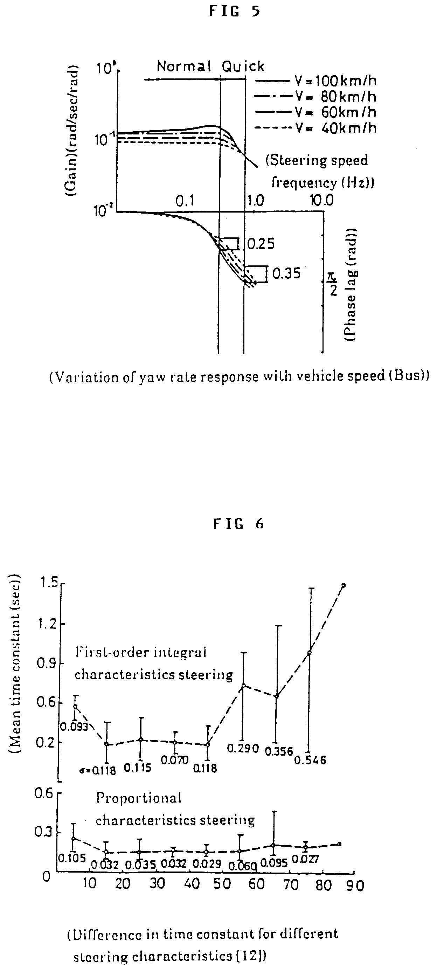

Further, with regard to a desirable motor vehicle response characteristic, there are reports, one defines Tβ factor corresponding to the product of time constant and yaw gain and indicates that the smaller the products is, the higher is the subjective judgement of the driver (see Fig. 2), and the other indicates that there is an optimum region of moving direction holding property in a range of small time constants and of certain amounts of yaw acceleration again (see Fig. 3). These date concern with passenger cars, however these tendencies are similar in trucks and buses. Fig. 4 shows an example of the response characteristic of a truck and a bus, wherein the truck is equipped with a front engine and leaf suspensions and the bus with a rear engine and air suspensions, and the gain and the phase lag of the truck are smaller than those of the bus. Further the subjective judgement of the truck is better than the bus. These gain and phase lag increase in response to increase of the vehicle speed (see Fig. 5) and thereby burdens to drivers increase. In view of Fig. 4 and Fig. 5, a desirable steering response region will be in a direction reducing both the gain and the phase lag smaller than those of now. This tendency meets with the previous tendency with regard to the passenger car data, when the phase lag is assumed to belong to the time constant. When the phase lag is large, an approach to an aimed course by a driver lags so that an excess turning or swing is caused, and when the gain is much larger, the excess turning is amplified so that the motor vehicle becomes unsteady. Still further the problems arising from the physiological ability difference can be compensated by reducing the time constant in a steering system.

Although the above explanation deals with the response performance with regard to the steering force inputs, the same is true with regard to disturbance inputs. For example, because of a disturbance ① due to road irregularity, an axle pedal displaces ② and as well a suspension ③ and vehicle body displace ④ which are sensed ⑤ by a human body and an adjusting operation is carried out, when any lag is included in the processes ① - ⑤ the adjusting steering operation lags and a deviation from a course becomes large accordingly. The displacement in this case (more precisely the displacement into the direction which causes the deviation from the course) corresponds to the gain and is self-evidently preferable to be small. Namely such disturbance be prevented at the entrance.

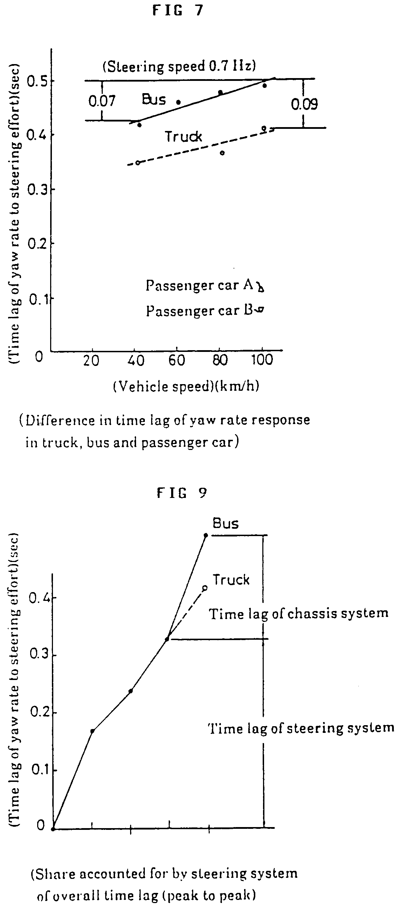

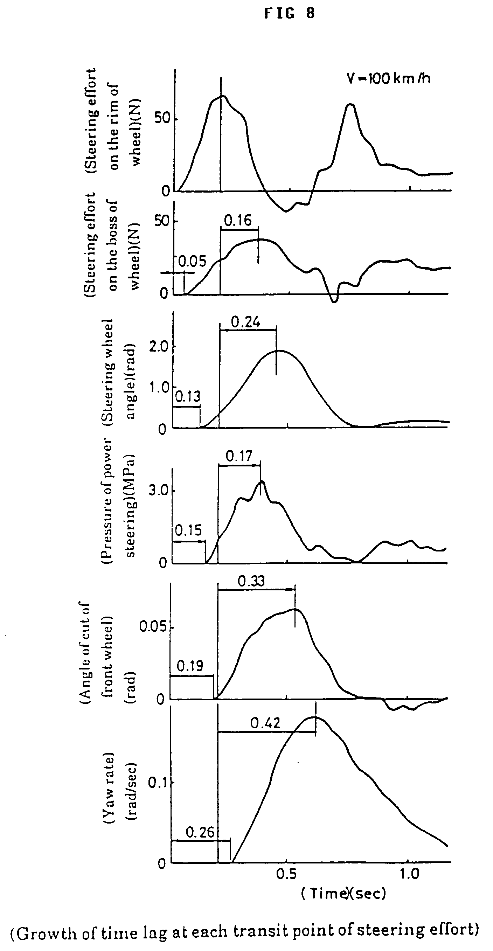

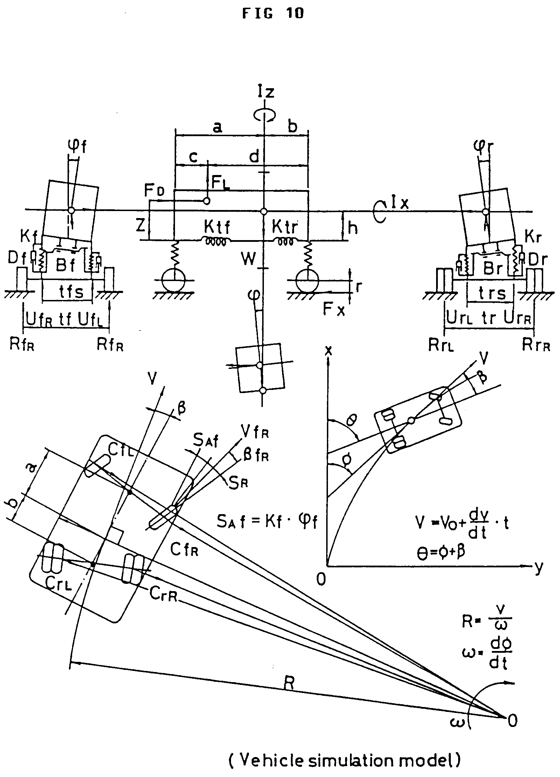

Further, when the steering response performances of trucks and buses are compared with those of passenger cars, there is a large difference in connection with the phase lag, which are very large in trucks and buses (see Fig. 7). For analyzing what causes make the phase lag such large, the time lag from the initiation of steering operation to the initiation of the moving direction change was measured along its transfer route (see Fig. 8). The time lag in the steering system occupies 60% of the total (see Fig. 9). The remaining 40% is the time lag in the vehicle body system, and the time lag of the buses becomes larger than that of trucks, the reasons of which are considered due to the influences of such as their suspension structure and load allotment difference to front and rear shafts. These truck and bus employ a common steering device so that with regard to the time lag in the steering device there is no difference.

Further, several studies were carried out to shorten the time lag in a steering system which occupies 60% among total lag. Some of these went further to suggest specific system structures but failed to reach practical uses.

Two reasons are presumed for the failures. One is presumed that the phase lag has been shortened however concurrently the gain gets large thereby the steering wheel becomes sensitive and the steering feeling is deteriorated. The other is presumed since the mechanical coupling between the steering wheel and the front wheels has been disconnected, problems in connection with safety are unsolved.

Accordingly, an object of the present invention is to provide a power steering device for use in a motor vehicles which enables compensation at the motor vehicle side of the reduction of the motor vehicle response performance at a high speed region and the physiological ability difference of drivers, enables a responsiveness control which enhances a response performance in response to steering force inputs and further enables a speed sensing control which changes steering efforts in response to the motor vehicle.

JP-A-63-106181 discloses a power steering device for use in motor vehicles which steers front wheels and includes booster means for receiving pressurized hydraulic oil from different directions and for generating a steering force to steer the wheels of the vehicle in a left or right direction depending on from which direction the pressurized oil is received, hydraulic pump means for pressurising hydraulic oil from an oil reservoir and supplying the pressurized hydraulic oil to a feeding side hydraulic pipe arrangement, and directional control valve means connected to the feeding side hydraulic pipe arrangement and the booster means for controlling which direction the pressurized hydraulic oil flows to the booster, the directional control valve means having first and second reaction chambers.

### Disclosure of the invention

According to the present invention, an oil pressure setting valve is positioned in the feeding side hydraulic pipe arrangement between the hydraulic pump means and the directional control valve means, and pressurized oil injection valve means injects a pulse of pressurized hydraulic oil from the feeding side hydraulic pipe arrangement at an upstream side of the oil pressure setting valve to one of the first and second reaction chambers depending on the direction of a steering motion, the pulse of pressurized hydraulic oil being injected during an initial steering into a turn and having a ratio of the pulse length to the wavelength (L) of the steering effort of 0.075±0.075.

During turning of a steering wheel when a device of the invention is used, a pressure oil for compensation (correction) is injected with a pressure oil injection valve from the upstream side of the pressure oil setting valve in the hydraulic pipe arrangement of the feed side into one of a pair of reaction chambers in the turning direction of the directional control valve at the beginning of the steering wheel turning. In this way a power steering device for use in motor vehicles is achieved which enhances a response performance to a steering input by reducing the phase lag, yet without increasing the gain. The motor vehicle compensates for a reduction of the motor vehicle response performance at a high speed region, and for the physiological ability difference of drivers.

### Brief Description of the Drawings

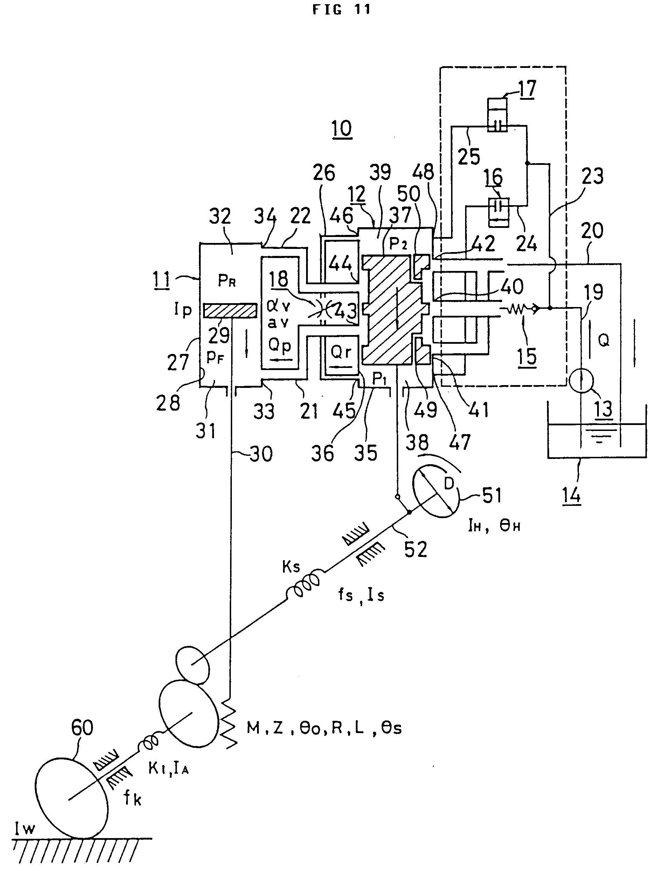

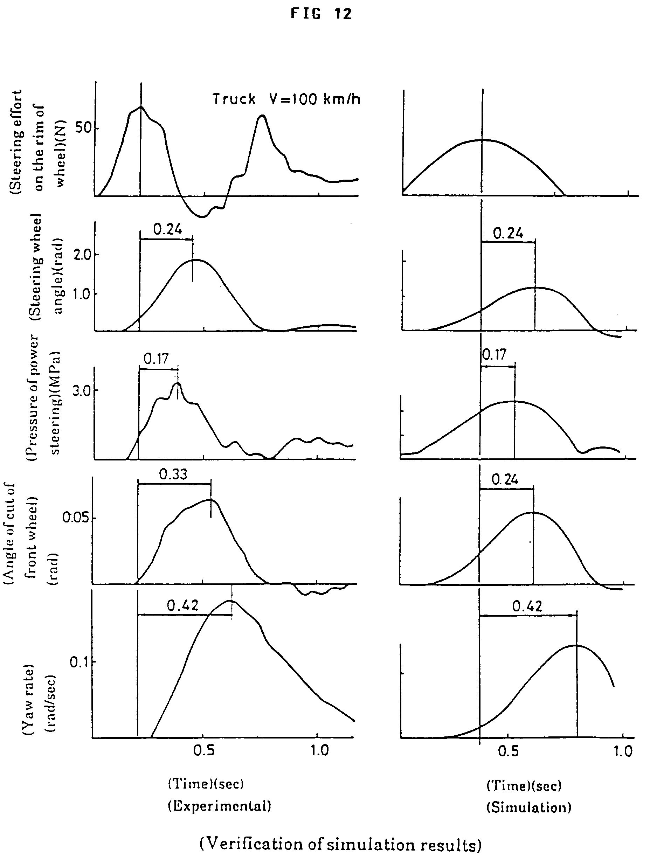

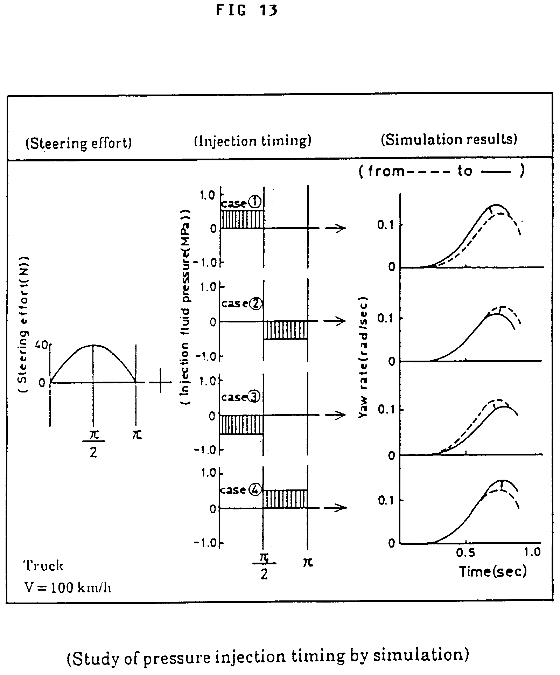

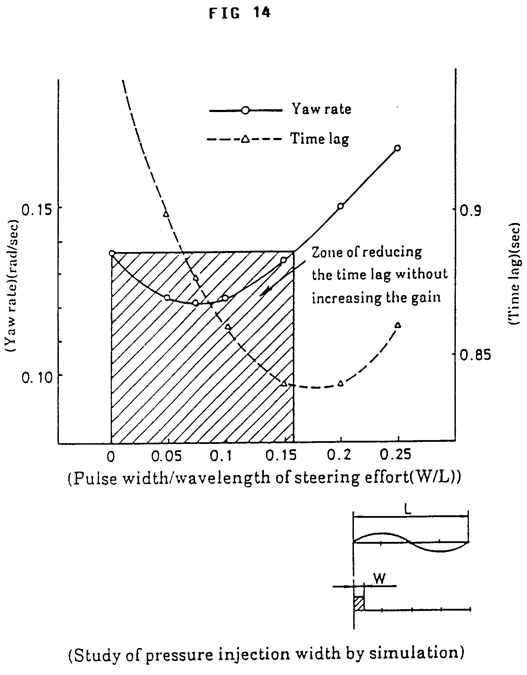

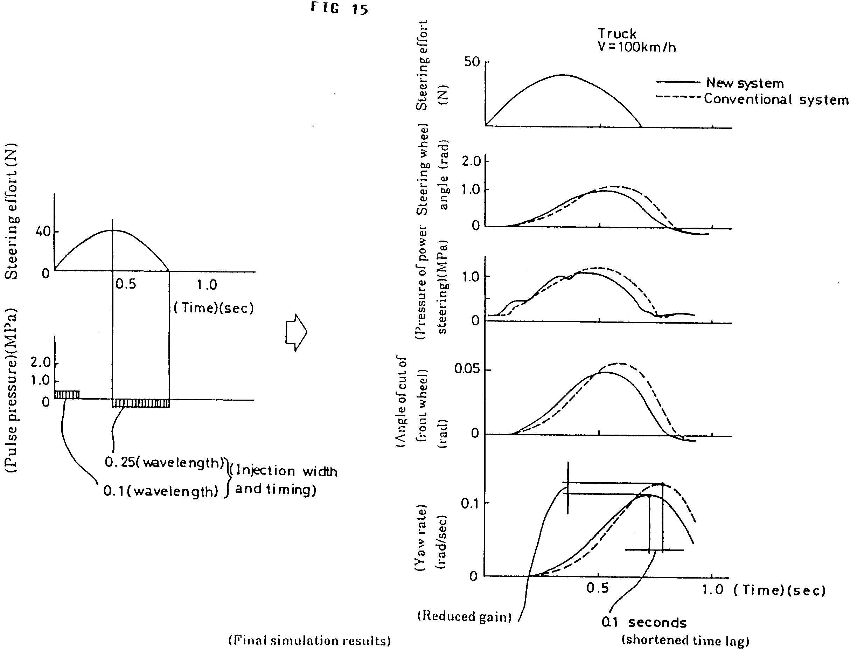

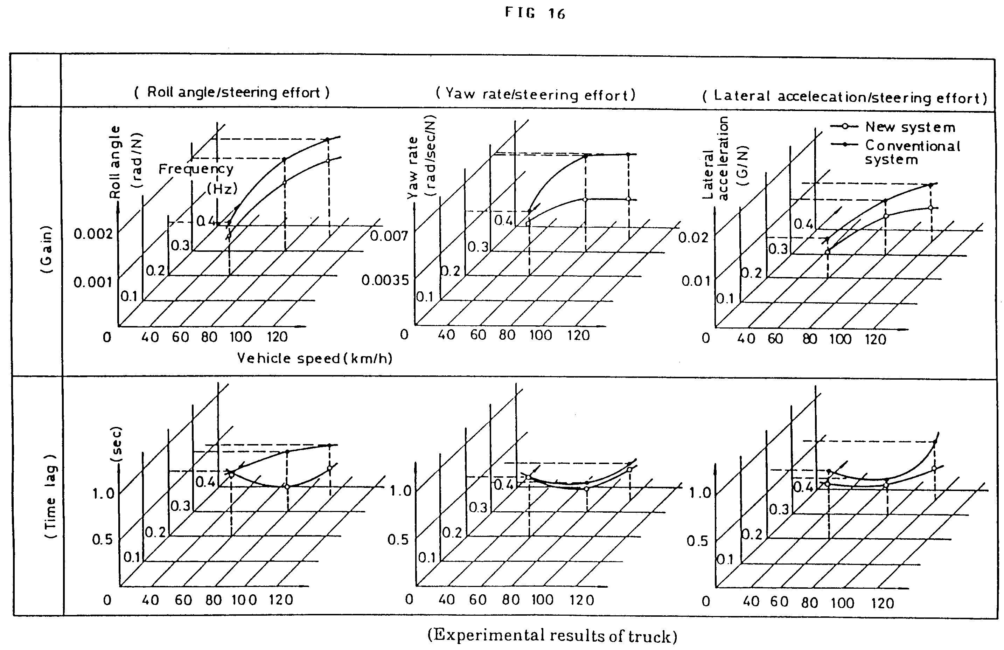

Fig. 1 is a graph illustrating a difference with regard to response time to light stimulus by gender and age, Fig. 2 is graphs illustrating a Tβ factor subjective judgement in a passenger car, Fig. 3 is a graph illustrating optimum ranges of yaw acceleration gain and time constant in a passenger car, Fig. 4 is a graph illustrating a difference in yaw rate response between a truck and a bus, Fig. 5 is a graph illustrating a variation of yaw rate response with vehicle speeds, Fig. 6 is a graph illustrating a difference in time constant for different steering characteristics, Fig. 7 is a graph illustrating a difference in time lag of yaw rate response in a truck, bus and passenger car, Fig. 8 is graphs illustrating a growth of time lag at each transit point of steering effort, Fig. 9 is a graph illustrating a share accounted for by a steering system of overall time lag, Fig. 10 is diagrams illustrating a vehicle simulation model, Fig. 11 is a schematic explanatory view illustrating a power steering device for use in motor vehicles according to the present invention, Fig. 12 is graphs illustrating a verification of simulation results with data of an actual motor vehicle (truck), Fig. 13 is graphs illustrating a study of pressure oil injection timing by simulation, Fig. 14 is graphs illustrating a study of pressure oil injection width by simulation, Fig. 15 is graphs illustrating final simulation results with regard to the injection timing and injection width of the pressure oil, and Fig. 16 is graphs illustrating experimental results of an actual motor vehicle (truck).

### A Best Mode for Carrying out the Invention

Hereinbelow, a specific embodiment of a power steering device for use in motor vehicles according to the present invention explained with reference to the drawings.

Fig. 11 shows a power steering device for use in motor vehicle according to the present invention is assembled into a truck.

This power steering device 10 includes, a booster 11 which is mechanically coupled with a front wheel of the truck and generates a steering effort to the front wheel; a directional control valve 12 which is provided with a pair of reaction chambers, operated by a steering wheel 51 and controls direction of an operating pressure oil flowing respectively from a hydraulic pump 13 at a feeding side to the booster 11 and simultaneously from the booster 11 through a hydraulic pipe arrangement 20 at a returning side to an oil reservoir 14; a pressure setting valve disposed in the hydraulic pipe arrangement 19 at the feeding side at the upstream side of the directional control valve 12; pressure oil injection valves 16, 17 disposed in compensation pressure oil channels 23, 24, 25 which are connected to the pair of the reaction chambers of the directional control valve 12 through the hydraulic pipe arrangement 19 of the feeding side at the upstream side of the directional control valve 12; a reaction regulating valve 18 disposed in a reaction passage 26 which communicates each other the pair of the reaction chambers 38, 39 of the directional control valve 12; and a controller (not shown), and is assembled therefrom, and the input side of the controller is electrically connected to a vehicle speed sensor (not shown) and a steering sensor (not shown), and the output thereof is electrically connected solenoid coils (not shown) of the pressure oil injection valves 16, 17 and an electric actuator (not shown) of the reaction regulating valve 18 respectively so as to achieve a responsiveness control which reduces a turning delay in response to a steering operation and a speed sensing control through which a hydraulic reaction corresponding to vehicle speed is obtained.

By means of the responsiveness control, the controller controls current flowing through the solenoid coils of the pressure oil injection valves 16, 17 in response to signals from the steering sensor and selectively opens and closes the pressure oil injection valves 16, 17, so that a pressure oil for compensation is selectively injected into the reaction chambers 38, 39 of the directional control valve 12 from the upstream side of the pressure setting valve 15 in the hydraulic pipe arrangement 19 at the feeding side, thereby the turning delay for the steering operation, in other words the response delay for the steering operation is reduced to suppress increases of the yaw rate and the phase lag and to maintain the same small. Of course, in this responsiveness control, during the turning of the steering of the steering wheel 51 the pressure oil for compensation (correction) is injected at the beginning of turning of the steering wheel 51 with the pressure oil injection valves 16, 17 from the upstream side of the pressure oil setting valve 15 in the hydraulic pipe arrangement of the feeding side into the pair of the reaction chambers 38, 39 of the directional control valve 12 in the turning direction, and during returning of the steering wheel 51, the pressure oil for compensation (correction) is injected with the pressure oil injection valves 16, 17 from the upstream side of the pressure oil setting valve 15 in the hydraulic pipe arrangement 19 of the feeding side into the pair of the reaction chambers of the directional control valve 12 in the returning direction.

On the other hand, by means of the speed sensing control, the controller controls a current flowing through the electric actuator of the reaction regulating valve 18 in response to signals from the vehicle speed sensor, and regulates throttling of the reaction regulating valve 18 in response to the increase of the motor vehicle speed to change a fluid resistance to the oil flowing between the reaction chambers of the directional control valve 12 so that the steering effort with the steering wheel is rendered lighter during a stationary turning and a low speed cruising, and during a high speed cruising the steering effort with the steering wheel is rendered heavier to obtain a sufficient response from the steering wheel.

The booster 11 includes a cylinder body 27 in which a cylinder bore 28 is formed; a piston 29 which is reciprocatingly and slidably fitted in the cylinder bore 28 and forms a pair of cylinder chambers 31, 32 in the cylinder bore 28; and a piston rod 30 one end of which is fixed to the piston 29 and the other end of which extends outwardly from the cylinder body 27 so as to enable to move in and out and is constructed therefrom. Of course, oil ports 33, 34 are opened to the corresponding cylinder chambers 31, 32 and formed on the cylinder body 27.

The directional control valve 12 includes a valve body 35 in which a valve bore is provided and which is assembled in the cylinder body 27 of the booster 11; and a spool 37 which is reciprocatingly and slidably fitted in the valve bore 36, forms a pair of reaction chambers 38, 39 in the valve bore 36, is link-coupled with a steering shaft 52 and slidably reciprocates in the valve bore 36 with the steering wheel 51, and the directional control valve controls direction of the operating pressure oil flowing respectively from the hydraulic pump 13 through the hydraulic pipe arrangement 19 at the feeding side to the cylinder chambers 31, 32 of the booster 11, and simultaneously from the cylinder chambers 31, 32 of the booster 11 through the hydraulic pipe arrangement 20 at the returning side to the oil reservoir 14 wherein the steering amount of the booster 11 is constituted so as to be feedback. Naturally, a pump port 40, tank ports 41, 42, cylinder ports 43, 44, reaction ports 45, 46 and injection ports 47, 48 are opened to the valve bore 36 at respective predetermined positions and formed on the valve body 35, the pump port 40 is connected to the hydraulic pipe arrangement 19 of the feeding side, and the tank ports 41, 42 to the hydraulic pipe arrangement 20 at the returning side respectively, further the cylinder ports 43, 44 are connected to the corresponding oil ports 33, 34 through communicating channels 21, 22. Further, a reaction communicating ports 49, 50 are formed in the spool 37 through which the operating pressure oil is fed from the hydraulic pump 13 to either one of the reaction chambers 38, 39 and simultaneously the operating pressure oil is returned from the other of the reaction chambers 38, 39 to the oil reservoir 14 in response to the sliding direction of the spool 37 when the spool 37 slidably reciprocates in the valve bore 36.

The hydraulic pump 13 is actuated by a diesel engine (not shown) mounted on the truck, and is disposed in the hydraulic pipe arrangement 19 at the feeding side in order to feed the operating oil to the booster 11, sucks up the oil from the oil reservoir 14, pressurizes and is adapted to be obtained a discharge amount of the pressure oil nearly proportional to the diesel engine revolution number.

After the power steering device 10 was assembled as explained above, a computer program capable of simulating the power steering device 10 was prepared for determining an optimum control, then a verification with data of an actual motor vehicle was carried out, thereafter, an investigation was performed in order to reduce the phase lag without increasing the gain when control be applied and what kind of control be employed.

For this simulation, the vehicle model shown in Fig. 10 was used. Further, equations of motion and hydraulic pressure calculation equations were formulated, and such were solved by using CSSL (Continuous System Simulation Language) (see Fig. 12). The results of calculation showed nearly the same tendency as the actually measured data so that the study on the optimum control was carried out using the results.

This study on the optimum control will be explained hereinbelow. As will be understood from Fig. 9, generation of hydraulic pressure by the power steering device 10 lags by 0.1 - 0.2 sec. from the application of a steering effort to the steering wheel 51. When the hydraulic pressure is immediately generated after catching steering signals, a shortening of the delay at least by 0.1 sec. is enabled. This shortening by 0.1 sec. is equivalent to the fact that the delay level of the bus is improved to that of the truck or the delay level at a vehicle speed of 100 Km/h to that below a vehicle speed of 60 Km/h. With such in mind, calculations were carried out in which a correcting hydraulic pressure of +5 Kg/cm², namely a pulse hydraulic pressure is applied to the reaction chambers 38, 39 of the directional control valve 12 immediately after catching the steering signals (see Fig. 13), and wherein four cases, in that, case ① through case ④ were calculated. Further, with regard to case ① the calculation was carried out by changing the pulse width of the hydraulic pressure. As the results, in order to reduce the time lag without increasing the gain, it was found out that when a 0.1 wavelength pulse in case ① and 0.25 wavelength pulse in case ② were applied, desirable results were obtained.

Further, another case was calculated wherein the 0.1 wavelength pulse in case ① was applied at the beginning of the turning of the steering wheel 51 and the 0.25 wavelength pulse in case ② was applied at the returning (see Fig. 15). As the result, both the gain and the phase lag were reduced.

When explained this by using Fig. 7, a level of the phase lag during cruising at a vehicle speed of 100 Km/h was reduced to that equivalent to the cruising at a vehicle speed of 60 Km/h.

Therefore, based on the study results thus obtained, the power steering device 10 was operated, wherein the oil pressure at the upstream is always maintained higher by 5 Kg/cm² (pressure oil) than the oil circuit pressure with the use of the hydraulic pressure setting valve 15.

When a steering effort acts on the steering wheel 51, the steering sensor which is built-in in the steering wheel 51 detects thereof, the pressure oil injection valves 16, 17 are selectively opened by the controller, the compensation pressure oil is selectively injected into the reaction chambers 38, 39 of the directional control valve 12, the directional control valve 12 is actuated by bypassing the mechanical system and the cylinder hydraulic pressure in the booster 11 is immediately built up.

In such manner, the responsiveness control is carried in this power steering device 10. From the above aspect, the power steering device 10 of this case is a feed forward control system.

As explained above this power steering device 10 was assembled in a truck and tested. The results thereof are illustrated in Fig. 16.

As seen from Fig. 16, all of roll angle, yaw rate, lateral G gain and phase lag are remarkably reduced and the data during cruising at a vehicle speed of 100 Km/h have been improved to those equivalent to the cruising below a vehicle speed of 60 Km/h with a conventional power steering device.

On the other hand, the speed sensing control of this power steering device is operated in the same manner as the conventional power steering device.

From the above examples of the present invention explained with reference to the drawings, persons having ordinary skill in the technical field pertaining to the present invention will appreciate that several modifications are possible to the described examples of the present invention, without departing from the scope of the invention as claimed.

### Industrial Applicability

As will be understood from the above, the power steering device for use in the motor vehicle according to the present invention is suitable for use in automobiles, in particular for use in trucks and buses.

## Claims

1. A power steering device (10) for use in motor vehicles which steers front wheels (60) and includes booster means (11) for receiving pressurized hydraulic oil from different directions and for generating a steering force to steer the wheels (60) of the vehicle in a left or right direction depending on from which direction the pressurized oil is received, hydraulic pump means (13) for pressurising hydraulic oil from an oil reservoir (14) and supplying the pressurized hydraulic oil to a feeding side hydraulic pipe arrangement (23, 24, 25), and directional control valve means (12) connected to the feeding side hydraulic pipe arrangement (23, 24, 25) and the booster means (11) for controlling which direction the pressurized hydraulic oil flows to the booster (11), the directional control valve means (12) having first and second reaction chambers (38, 39)
characterized in that,
an oil pressure setting valve is positioned in the feeding side hydraulic pipe arrangement between the hydraulic pump means (13) and the directional control valve means (12), and
pressurized oil injection valve means (16, 17) injects a pulse of pressurized hydraulic oil from the feeding side hydraulic pipe arrangement (23, 24, 25) at an upstream side of the oil pressure setting valve (15) to one of the first and second reaction chambers (38, 39) depending on the direction of a steering motion, the pulse of pressurized hydraulic oil being injected during an initial steering into a turn and having a ratio of the pulse length (W) to the wavelength (L) of the steering effort of 0.075±0.075.

2. A power steering device according to claim 1, further comprising reaction regulating valve means (18) for throttling in response to varying motor vehicle speeds, the reaction regulating valve means (18) being positioned in the passage connecting the first and second reaction chambers (38, 39) of the directional control valve means (12).

3. A power steering device according to claim 1 or 2, wherein further said pressurized oil injection valve means (16, 17) injects a pulse of pressurized hydraulic oil during an initial steering out of a turn and having a ratio of the pulse length (W) to the wavelength (L) of the steering effort of approximately 0.25.

## Patentansprüche

1. Servolenkungsvorrichtung (10) zur Verwendung in Kraftfahrzeugen, die Vorderräder (60) lenkt und umfaßt eine Lader-Einrichtung (11) zum Empfangen von verdichtetem hydraulischen Öl von unterschiedlichen Richtungen und zum Erzeugen einer Lenkkraft, um in Abhängigkeit von der Richtung, aus der das verdichtete Öl empfangen wird, die Räder (60) des Fahrzeugs in eine linke oder rechte Richtung zu lenken, eine hydraulische Pumpeinrichtung (13) zum Verdichten von hydraulischem Öl von einem Ölreservoir (14) und zum Zuführen des verdichteten hydraulischen Öls an eine zuführungsseitige hydraulische Rohranordnung (23, 24, 25), und eine Richtungssteuerungs-Ventileinrichtung (12), die mit der zuführungsseitigen hydraulischen Rohranordnung (23, 24, 25) und der Lader-Einrichtung (11) verbunden ist, zum Steuern der Richtung, in der das verdichtete hydraulische Öl an den Lader (11) fließt, wobei die Richtungssteuerungs-Ventileinrichtung (12) erste und zweite Reaktionskammern (38, 39) aufweist;
dadurch gekennzeichnet, daß
ein Öldruck-Einstellventil in der zuführungsseitigen hydraulischen Rohranordnung zwischen der hydraulischen Pumpeinrichtung (13) und der Richtungssteuerungs-Ventileinrichtung (12) positioniert ist; und
eine Einspritz-Ventileinrichtung (16, 17) für verdichtetes Öl einen Impuls eines verdichteten hydraulischen Öls von der zuführungsseitigen hydraulischen Rohranordnung (23, 24, 25) an einer stromaufwärts gelegenen Seite des Öldruck-Einstellventils (15) an eine der ersten und zweiten Reaktionskammern (38, 39) in Abhängigkeit von der Richtung einer Lenkbewegung einspritzt, wobei der Impuls des verdichteten hydraulischen Öls während eines anfänglichen Lenkens in einer Kurve eingespritzt wird und ein Verhältnis der Impulslänge (W) zu der Wellenlänge (L) der Lenkanstrengung 0,0075±0,0075 aufweist.

2. Servolenkungsvorrichtung nach Anspruch 1, ferner umfassend eine Reaktionsregulierungs-Ventileinrichtung (18) zum Drosseln im Ansprechen auf sich verändernde Kraftfahrzeuggeschwindigkeiten, wobei die Reaktionsregulierungs-Ventileinrichtung (18) in dem Durchgang positioniert ist, der die ersten und zweiten Reaktionskammern (38, 39) der Richtungssteuerungs-Ventileinrichtung (12) verbindet.

3. Servolenkungsvorrichtung nach Anspruch 1 oder 2, wobei die Einspritz-Ventileinrichtung (16, 17) für verdichtetes Öl ferner einen Impuls eines verdichteten hydraulischen Öls während eines anfänglichen Lenkens aus einer Kurve heraus einspritzt und ein Verhältnis der Impulslänge (W) zu der Wellenlänge (L) der Lenkanstrengung von ungefähr 0.25 aufweist.

## Revendications

1. Direction assistée (10) destinée à être utilisée dans des véhicules à moteur, qui dirige les roues avant (60) et qui comprend un dispositif (11) de surpression destiné à recevoir un fluide hydraulique sous pression dans les directions différentes et à créer une force de direction des roues (60) du véhicule vers la gauche ou vers la droite suivant la direction de réception du fluide hydraulique sous pression, une pompe hydraulique (13) destinée à mettre le fluide hydraulique d'un réservoir (14) sous pression et à transmettre le fluide hydraulique sous pression à un ensemble (23, 24, 25) de conduites hydrauliques du côté d'alimentation, et un distributeur (12) de commande directionnelle raccordé à l'ensemble (23, 24, 25) de conduites hydrauliques du côté d'alimentation et au dispositif de surpression (11) afin qu'il règle le sens de circulation du fluide hydraulique sous pression vers le dispositif de surpression (11), le distributeur (12) de commande directionnelle ayant une première et une seconde chambre de réaction (38, 39), caractérisée en ce que :
une soupape de réglage de pression de fluide hydraulique est placée dans l'ensemble de conduites hydrauliques du côté d'alimentation entre la pompe hydraulique (13) et le distributeur de commande directionnelle (12), et
un dispositif (16, 17) à soupapes d'injection de fluide hydraulique sous pression injecte une impulsion du fluide hydraulique sous pression de l'ensemble (23, 24, 25) de conduites hydrauliques du côté d'alimentation au côté amont de la soupape (15) de réglage de pression hydraulique vers l'une des première et seconde chambres de réaction (38, 39) en fonction du sens de déplacement de la direction, l'impulsion de fluide hydraulique sous pression étant injectée pendant une commande initiale de direction de mise en virage et ayant un rapport de durée d'impulsion (W) à la longueur d'onde (L) de l'effort de direction de 0,075 ± 0,075.

2. Direction assistée selon la revendication 1, comprenant en outre une soupape (18) de régulation de réaction destinée à assurer un étranglement suivant la vitesse variable du véhicule à moteur, la soupape (18) de régulation de réaction étant placée dans le passage reliant la première et la seconde chambre de réaction (38, 39) du distributeur de commande directionnelle (12).

3. Direction assistée selon la revendication 1 ou 2, dans laquelle le dispositif (16, 17) à soupapes d'injection de fluide hydraulique sous pression injecte une impulsion de fluide hydraulique sous pression pendant la commande initiale de direction de sortie de virage, ayant un rapport de la longueur d'impulsion (W) à la longueur d'onde (L) de l'effort de direction approximativement égal à 0,25.
